# EUROPEAN PATENT SPECIFICATION

(11) **EP 4 091 225 B1**
(45) Date of publication and mention of the grant of the patent: **31.01.2024**
(21) Application number: 21701842.3
(22) Date of filing: 13.01.2021
(51) Int. Cl.: B60L 53/35, B60L 3/00, B60L 53/31, H02G 3/04, H02G 9/04

(54) **DEPLOYABLE ELECTRIC VEHICLE CHARGING POINT**
AUSFAHRBARE LADESTATION FÜR ELEKTROFAHRZEUGE
POINT DE CHARGE DE VÉHICULE ÉLECTRIQUE DÉPLOYABLE

(30) Priority: 13.01.2020 GB 202000469
(43) Date of publication of application: 23.11.2022
(73) Proprietor: ALBRIGHT PRODUCT DESIGN LIMITED, Cheltenham GL50 2LB (GB)
(72) Inventor: AYLESBURY, Andrew, Cheltenham Gloucestershire GL50 2LB (GB)
(74) Representative: Games, Robert Harland
(86) International application number: PCT/GB2021/050075
(87) International publication number: WO 2021/144569

(56) References cited:
- CN-A- 108 162 789
- CN-A- 108 944 527
- CN-U- 209 159 465
- DE-A1-102009 024 721
- JP-A- 2010 226 816

## Description

The present invention relates to a deployable electric vehicle charging point.

### BACKGROUND TO THE INVENTION

It is known to provide electric charging points for electric vehicles. These points are typically installed in a street, at home, an industrial area or at a service area, for example, at a motorway service station. Councils also install charging points in carparking areas in towns.

Sometimes it is beneficial to provide a charging point which is stored underground, when not being used, and which deploys to an above ground position for use. This is beneficial to reduce visual street clutter. Furthermore, this removes a permanent fixture, which may be regarded as an obstacle to pedestrians and traffic. Often, charging points are used overnight, and so there is an advantage in being able to store the charge point underground when not in use.

Storing a charge point underground when not in use also reduces the risk of vandalism or damage caused by a collision.

A problem of existing deployable electric vehicle charging points is that they deploy vertically from their base or underground containment. Typically, the charging connection is provided on a post, which is driven upwardly out of the ground from the base unit. This means that if the charging point is situated on a sloping surface, be it a road or pavement, then the charging point will not deploy vertically, but at an angle. If it is to be deployed vertically, then this creates difficulties in installing the base unit.

A further difficulty with installing the base unit is the depth at which excavations have to be made to accommodate the base unit. There are many existing groundworks, such as utility conduits, cables or sewers, which may have to be disturbed or prevent a deployable charging point from being installed.

Furthermore, the cabling to the charging components has to be routed around the base unit. The cables may be forced to move or bend thought tight angles which is particularly problematic for higher capacity charging as the cables are much larger in diameter and more rigid.

CN 108162789 A discloses a ground hidden charging device comprising a plurality of parking spaces distributed in a rows, and each parking space correspondingly provided with a mounting groove placed under the ground, a guide rail is arranged between two adjacent installation slots, and a mobile charging mechanism hingedly connected with the guide rail is provided in the installation slot. The slots are divided into two groups and set into a plurality of groups. Each group of installation slots is provided with a drive mechanism for pushing two adjacent mobile charging mechanisms upside-down. Under, there is a shutter mechanism that fills the gap of the mounting groove.

CN 209159465 U discloses an anti-collision charging pile. The anti-collision charging pile comprising a base, a weighbridge and a charging pile body. the outer contour of the base is rectangular, and an inner contour is formed above the base. rectangular trough table, a landslide is disposed on the edge of the abutment away from the trough, the angle of the landslide is less than forty degrees, and the upper surface of the abutment is provided with the weighbridge, and the bottom end of the trough is adjacent to the weighbridge. One side of the bottom plate is fixed by screws, and the bottom plate is welded with two sets of bottom pillars perpendicular to the bottom plate, and a transfer block is disposed between the bottom pillars, and the first gear is disposed at a center position of the intermediate block. A rotating top plate is disposed above the rotating block, and a charging pile fixing plate is fixed on the top of the rotating top plate. A charging pile main body is disposed above the charging pile fixing plate, and a speed reducer is fixed on the bottom plate by a screw, and the deceleration is performed. A motor and a second gear are respectively disposed on the input shaft and the output shaft of the device.

It is an object of the present invention to reduce or substantially obviate the aforementioned problems.

### STATEMENT OF INVENTION

According to the present invention there is provided a deployable electric vehicle (EV) charging point comprising a housing for burying substantially below ground level, a post and a power distribution connector mounted to the post; the post being mounted in the housing about a pivotal axis and movable about the pivotal axis between an inoperative position within the housing and operative position, wherein the post is substantially deployed vertical in the operative position irrespective of the incline of the housing to the horizontal and the ground level for enabling the electric vehicle charging point to be installed on an incline.

Advantageously, if the housing is buried and lies flush with the ground surface, for example on a street which is not level, ie on a hill, then it is possible to ensure that the post, in its operative position, is substantially plumb (or vertical) while also removing unnecessary street furniture and visual clutter. In the operative position, the post may be substantially vertical irrespective of the incline of the housing to the horizontal and the ground level.

The post may generally be considered a pivotally deployable post.

The deployable EV charging point may include a drive means to move the post between the inoperative and operative positions.

The drive means may include an electric motor.

The drive means may include a linear actuator.

The deployable EV charging point may include a transmission means between the drive means and the post. The transmission means may include a worm drive.

Transmission means may be provided for enabling the speed of post deployment to be controlled. Additionally, by the worm drive being self-locking, it is possible to hold the operative position of the post at the desired angle. For example, the worm-drive may be stopped in a particular position.

The central axis of the power distribution connector may be positioned at an angle to the post. The angle may be between 20 degrees and 70 degrees, preferably between 30 and 60 degrees, and more preferably between 40 and 50 degrees.

An angled power distribution connector may serve to reduce the stress on the connected cable, particularly thicker cables used for fast charging. Furthermore, it is easier and more intuitive than horizontal or vertical connections.

A plate may be provided for covering the casing when the post is in the operative position.

The plate may automatically cover the basing when the post is in the operative position. The plate may move from a position within the casing to a position at the upper end of the casing as the post moves from the inoperative to the operative position and vice versa.

Advantageously, the plate may cover an opening at street level which may reduce risk and improve health and safety. It may also ensure that foreign matter, such as leaves, refuse and similarly sized items may not be able to enter the housing.

A mechanical coupling means may be provided between the post and the plate to move the plate from the position within the casing to a position at the upper end of the casing as the post moves from the inoperative to the operative position and vice versa.

The upper end of the casing being the end closest to the surface when the housing is buried. In other words, the upper end being the end of the casing comprising an opening out of which the post is pivotally deployed.

The coupling means may include an arm pivotally attached to the post. The arm may comprise a pin for locating in elongate recess in the plate.

The operative position of the post is generally vertical and may be perpendicular or at another angle, acute or obtuse relative to the upper edge of the housing, dependent on the lie of the ground relative to the horizontal.

The length of the housing may be greater than the height of the housing. When buried, the housing may extend further laterally than in depth below the ground.

The housing may generally be cuboid in shape with an opening in one of the faces.

The deployable EV charging point may be a connected device. The deployable EV charging point may comprise a communication means for communicating with a computer network. The communication means allows the charging point to be monitored remotely.

The deployable EV charging point may comprise an impact detection means for detecting, measuring and recording a received impact. The impact detection means may be an accelerometer.

The deployable EV charging point may comprise an alarm means for altering person within the vicinity. The alarm means may include a speaker. The alarm means may include illumination means, such as LEDs.

The deployable EV charging point comprises a heater for warming the post and/or housing/casing.

The deployable EV charging point may comprises an air pollution sensor.

The deployable electric vehicle charging point may comprise a monitoring means for monitoring the area around the deployable electric vehicle charging point.

The monitoring means may include a camera disposed in the post. The camera may be an omnidirectional camera or include a wide field of view. A first camera may be disposed on the post so as to provide a view external to the deployable EV charging point when the post in in the inoperative position.

The monitoring means may include a microphone. The monitoring system may include an array of microphones disposed in the post and/or the housing/casing.

The deployable EV charging point may comprise a charging cable holding means disposed on the post for securing at least a portion of the electric vehicle charging cable.

### BRIEF DESCRIPTION OF THE DRAWINGS

For a better understanding of the present invention, and to show more clearly how it may be carried into effect, reference will now be made by way of example only to the accompanying drawings, in which:
Figure 1 shows a perspective view of an electric vehicle charging point in a deployed position ready for charging a vehicle;
Figure 2 shows a perspective view of the electric vehicle charging point of Figure 1 in a retracted position below ground;
Figure 3A shows a perspective view of a second embodiment of an electric vehicle charging point in a retracted position below ground;
Figure 3B shows a perspective view of the electric vehicle charging point of Figure 3A in a partially extended position, between the deployed and operative positions; and
Figure 3C shows a perspective view of the electric vehicle charging point of Figure 3A in a deployed position ready for charging a vehicle.

### DESCRIPTION OF PREFERRED EMBODIMENTS

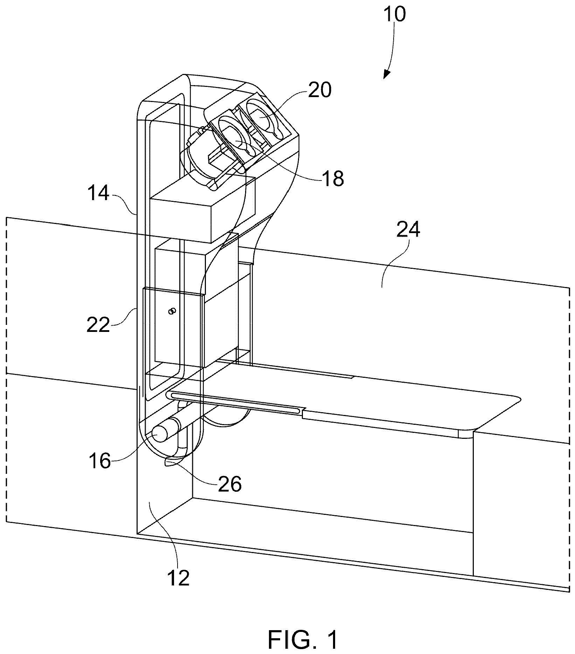

Referring firstly to Figure 1, a deployable electric vehicle (EV) charging point is indicated generally at 10. The charging point 10 is shown in a deployed position. The charging point 10 includes a housing 12 and a charging post 14. The housing 12 is a substantially rectangular box, preferably made of metals or a composite, which is rigid and can be concreted into the ground.

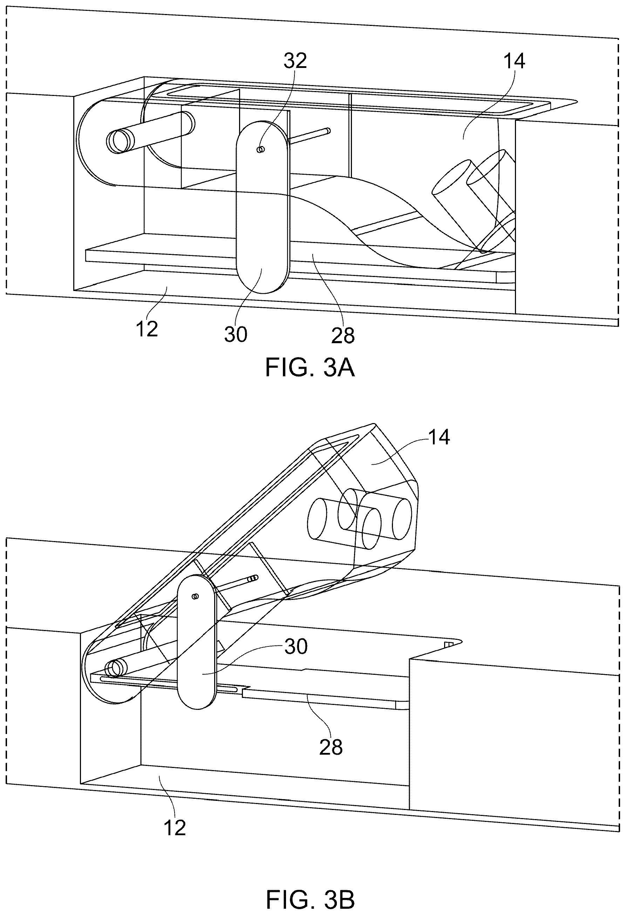

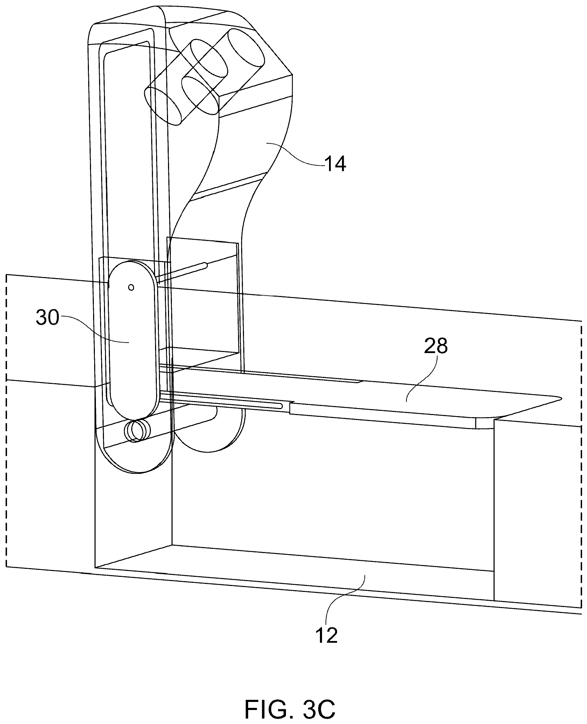

The post 14 is mounted to the housing 12 about an axle 16, providing a pivot, around which the post can move in and out of the housing 12, as indicated in Figures 3A to 3C. The axle is mounted to side walls of the housing.

The upper end of the post 14 is provided with an angled surface, for example at around 45 degrees to a central axis of the post. First and second charging sockets, or power distribution connection points, 18,20 are provided in the surface. The sockets are for receiving plugs of EV charging cables.

The angled position of the sockets facilitates easy connection of plugs with the sockets 18,20. Furthermore, a cable supplying power within the post 14 can be easily routed without significant bending.

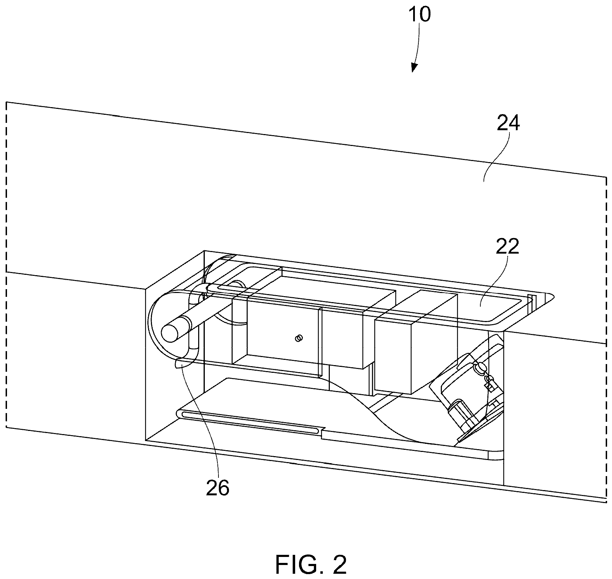

When the post 14 is in the stored position, as shown in Figure 2, a rear side 22 of the post lies flush with upper edges of the housing 12 and level with the surrounding ground surface, indicated at 24. The rear side 22 is intended to be weight bearing, and a person, for example, can walk onto it, for example, if it is in a pavement or walkway.

In the deployment of the post 14, a power supply cable 26, only has to bend to facilitate the rotary movement at the base of the post about the pivot. The maximum angle of rotation is 90 degrees, but will be reduced on a sloping surface by the angle of the surface to the horizontal. The housing is generally positioned with the pivot point at a lower point on the slope, to minimise the movement of the post and cable 26.

Deployment of the post 14 and movement of the post 14 to the retracted position is powered by an electric motor and a worm drive, which can be controlled remotely using a key fob. Alternatively, the post 14 may be controlled using an application on a mobile device, such as a telephone. Control electronics ensure that the post rotates to the vertical position, irrespective of the angle of the housing 12 in the ground. This position may be detected by a sensor or may be programmed on installation. In this position, the rear side 22 of the post is vertically disposed.

In order to prevent freezing of the axle 16, heating elements may be disposed inside the casing 12. The heating elements may be thermostatically controlled, or may be controlled using the key fob, as part of the actuation control.

A housing cover plate 28 is located in the base of the housing 12 when the post is in the inoperative position (Fig 3A). This cover plate 28 rises up with the post to the top of the housing 12, as the post is deployed. The cover plate covers the space vacated by the post 14 in the housing 12, for security and safety. A link arm 30, for example, can synchronously lift the cover plate 28 as the post rotates. The link arm is connected to the post 14 about a pivot 32 and is connected to the cover plate by a pin and slot arrangement. Link arms may be provided on both sides of the post to add stability to the plate when deployed, as desired. Releasable securing means, such as latches, can be utilised to further support the periphery of the cover plate 28 in its upper position.

It will be appreciated that the pivotal deployment of the charging point is beneficial because the ground depth of the housing can be limited, for example to around 300mm, and the height of the post is not compromised. Furthermore, the post 14 can deploy vertically, irrespective of the angle of the ground surface 24, with minimal rotational movement, typically less than 90 degrees, which reduces stress on the cabling.

The charging post 10, may also have lights, one or more cameras, a microphone and other sensing equipment mounted to it for illumination, surveillance and damage detection purposes. This equipment may be connected to a network as part of a wider surveillance network. In particular, an accelerometer may be installed proximate the top of the post for detection of a vehicle impact. Detection of an impact may shut off the power supply to the post.

The embodiments described above are provided by way of example only, and various changes and modifications will be apparent to persons skilled in the art without departing from the scope of the present invention as defined by the appended claims.

## Claims

1. A deployable electric vehicle charging point (10) comprising:
a housing (12) for burying substantially below ground level, a post (14) and a power distribution connector (18, 20) mounted to the post;
the post (14) being mounted in the housing (12) about a pivotal axis (16) and movable about the pivotal axis (16) between an inoperative position within the housing (12) and an operative position,
***characterised in that*** the post (14) is substantially deployed vertical in the operative position irrespective of the incline of the housing (12) to the horizontal and the ground level for enabling the electric vehicle charging point (10) to be installed on an incline.

2. A deployable electric vehicle charging point (10) as claimed in claim 1, in which an electric motor drives the post (14) between the inoperative and operative positions.

3. A deployable electric vehicle charging point (10) as claimed in claim 1 or claim 2, in which a central axis of the power distribution connector (18, 20) is positioned at an angle to the post of between 20 degrees and 70 degrees.

4. A deployable electric vehicle charging point (10) as claimed in claim 3, in which the angle is between 30 and 60 degrees.

5. A deployable electric vehicle charging point (10) as claimed in claim 4, in which the angle is between 40 and 50 degrees.

6. A deployable electric vehicle charging point (10) as claimed in any preceding claim, in which a plate (28) is provided for covering the housing (12) when the post (14) is in the operative position.

7. A deployable electric vehicle charging point (10) as claimed in claim 6, in which the plate (28) moves from a position within the housing (12) to a position at the upper end of the housing (12) as the post (14) moves from the inoperative to the operative position and vice versa.

8. A deployable electric vehicle charging point (10) as claimed in any preceding claim, in which the post (14), in its operative position, is at a predetermined angle to a plane formed by the upper end of the housing (12).

9. A deployable electric vehicle charging point (10) as claimed in claim 8, in which the post (14), in its operative position, is at an acute angle to a plane formed by the upper end of the housing (12).

10. A deployable electric vehicle charging point (10) as claimed in claim 8, in which the post (14), in its operative position, is at an obtuse angle to a plane formed by the upper end of the housing (12).

11. A deployable electric vehicle charging point (10) as claimed in claim 8, in which the post (14), in its operative position, is perpendicular to a plane formed by the upper end of the housing (12).

12. A deployable electric vehicle charging point (10) as claimed in any preceding claim, in which the length of the housing (12) is greater than the height of the housing (12).

13. A deployable electric vehicle charging point (10) as claimed in any preceding claim, comprising a communication means for communicating with a network.

14. A deployable electric vehicle charging point (10) as claimed in any preceding claim, comprising an impact detection means for detecting, measuring and recording a received impact.

15. A deployable electric vehicle charging point (10) as claimed in any preceding claim, comprising an alarm means for alerting person within the vicinity.

## Patentansprüche

1. Ausfahrbarer Ladepunkt (10) für Elektrofahrzeuge, umfassend:
ein Gehäuse (12), das im Wesentlichen unter der Erde vergraben werden kann, einen Pfosten (14) und einen an dem Pfosten befestigten Stromverteilungsstecker (18, 20);
den Pfosten (14), der im Gehäuse (12) um eine Schwenkachse (16) montiert ist und um die Schwenkachse (16) zwischen einer Ruhestellung im Gehäuse (12) und eine Betriebsstellung bewegbar ist,
**dadurch gekennzeichnet, dass** der Pfosten (14) in der Betriebsstellung unabhängig von der Neigung des Gehäuses (12) zur Horizontalen und dem Bodenniveau im Wesentlichen vertikal ausgefahren ist, um die Installation des Ladepunkts (10) für Elektrofahrzeuge an einer Steigung zu ermöglichen.

2. Ausfahrbarer Ladepunkt (10) für Elektrofahrzeuge nach Anspruch 1, bei dem ein Elektromotor die Pfosten (14) zwischen der Ruhestellung und der Betriebsstellung antreibt.

3. Ausfahrbarer Ladepunkt (10) für Elektrofahrzeuge nach Anspruch 1 oder Anspruch 2, wobei eine Mittelachse des Stromverteilungssteckers (18, 20) in einem Winkel zu dem Pfosten zwischen 20 Grad und 70 Grad angeordnet ist.

4. Ausfahrbarer Ladepunk (10) für Elektrofahrzeuge nach Anspruch 3, bei dem der Winkel zwischen 30 und 60 Grad liegt.

5. Ausfahrbarer Ladepunk (10) für Elektrofahrzeuge nach Anspruch 4, bei dem der Winkel zwischen 40 und 50 Grad liegt.

6. Ausfahrbarer Ladepunk (10) für Elektrofahrzeuge nach einem der vorstehenden Ansprüche, wobei eine Platte (28) zum Abdecken des Gehäuses (12) vorgesehen ist, wenn sich der Pfosten (14) in der Betriebsposition befindet.

7. Ausfahrbarer Ladepunkt (10) für Elektrofahrzeuge nach Anspruch 6, bei dem sich die Platte (28) von einer Position innerhalb des Gehäuses (12) in eine Position am oberen Ende des Gehäuses (12) bewegt, wenn sich der Pfosten (14) von der Ruheposition in die Betriebsposition und umgekehrt bewegt.

8. Ausfahrbarer Ladepunkt (10) für Elektrofahrzeuge nach einem der vorstehenden Ansprüche, wobei der Pfosten (14) in seiner Betriebsstellung in einem vorbestimmten Winkel zu einer durch das obere Ende des Gehäuses (12) gebildeten Ebene steht.

9. Ausfahrbarer Ladepunkt (10) für Elektrofahrzeuge nach Anspruch 8, wobei der Pfosten (14) in seiner Betriebsstellung in einem spitzen Winkel zu einer durch das obere Ende des Gehäuses (12) gebildeten Ebene steht.

10. Ausfahrbarer Ladepunkt (10) für Elektrofahrzeuge nach Anspruch 8, wobei der Pfosten (14) in seiner Betriebsstellung in einem stumpfen Winkel zu einer durch das obere Ende des Gehäuses (12) gebildeten Ebene steht.

11. Ausfahrbarer Ladepunkt (10) für Elektrofahrzeuge nach Anspruch 8, wobei der Pfosten (14) in seiner Betriebsstellung senkrecht zu einer durch das obere Ende des Gehäuses (12) gebildeten Ebene steht.

12. Ausfahrbarer Ladepunkt (10) für Elektrofahrzeuge nach einem der vorstehenden Ansprüche, wobei die Länge des Gehäuses (12) größer ist als die Höhe des Gehäuses (12).

13. Ausfahrbarer Ladepunkt (10) für Elektrofahrzeuge nach einem der vorstehenden Ansprüche, umfassend ein Kommunikationsmittel zur Kommunikation mit einem Netzwerk.

14. Ausfahrbarer Ladepunkt (10) für Elektrofahrzeuge nach einem der vorstehenden Ansprüche, umfassend eine Aufpralldetektionseinrichtung zum Erkennen, Messen und Aufzeichnen eines empfangenen Aufpralls.

15. Ausfahrbarer Ladepunkt (10) für Elektrofahrzeuge nach einem der vorstehenden Ansprüche, mit einer Alarmeinrichtung zur Warnung von Personen in der Umgebung.

## Revendications

1. Point de charge de véhicule électrique déployable (10) comprenant :
un boîtier (12) destiné à être enterré sensiblement au-dessous du niveau du sol, un montant (14) et un connecteur de distribution d'alimentation (18, 20) monté sur le montant ;
le montant (14) étant monté dans le boîtier (12) autour d'un axe de pivotement (16) et mobile autour de l'axe de pivotement (16) entre une position de repos à l'intérieur du boîtier (12) et une position de fonctionnement,
**caractérisé en ce que** le montant (14) est sensiblement déployé vertical dans la position de fonctionnement indépendamment de l'inclinaison du boîtier (12) par rapport à l'horizontale et au niveau du sol pour permettre au point de charge de véhicule électrique (10) d'être installé sur une pente.

2. Point de charge de véhicule électrique déployable (10) selon la revendication 1, dans lequel un moteur électrique entraîne le montant (14) entre les positions de repos et de fonctionnement.

3. Point de charge de véhicule électrique déployable (10) selon la revendication 1 ou la revendication 2, dans lequel un axe central du connecteur de distribution d'alimentation (18, 20) est positionné à un angle par rapport au montant compris entre 20 degrés et 70 degrés.

4. Point de charge de véhicule électrique déployable (10) selon la revendication 3, dans lequel l'angle est compris entre 30 et 60 degrés.

5. Point de charge de véhicule électrique déployable (10) selon la revendication 4, dans lequel l'angle est compris entre 40 et 50 degrés.

6. Point de charge de véhicule électrique déployable (10) selon l'une quelconque des revendications précédentes, dans lequel une plaque (28) est prévue pour recouvrir le boîtier (12) lorsque le montant (14) est dans la position de fonctionnement.

7. Point de charge de véhicule électrique déployable (10) selon la revendication 6, dans lequel la plaque (28) se déplace d'une position à l'intérieur du boîtier (12) à une position à l'extrémité supérieure du boîtier (12) lorsque le montant (14) se déplace de la position de repos à la position de fonctionnement et vice versa.

8. Point de charge de véhicule électrique déployable (10) selon l'une quelconque des revendications précédentes, dans lequel le montant (14), dans sa position de fonctionnement, se trouve à un angle prédéterminé par rapport à un plan formé par l'extrémité supérieure du boîtier (12).

9. Point de charge de véhicule électrique déployable (10) selon la revendication 8, dans lequel le montant (14), dans sa position de fonctionnement, se trouve à un angle aigu par rapport à un plan formé par l'extrémité supérieure du boîtier (12).

10. Point de charge de véhicule électrique déployable (10) selon la revendication 8, dans lequel le montant (14), dans sa position de fonctionnement, se trouve à un angle obtus par rapport à un plan formé par l'extrémité supérieure du boîtier (12).

11. Point de charge de véhicule électrique déployable (10) selon la revendication 8, dans lequel le montant (14), dans sa position de fonctionnement, est perpendiculaire à un plan formé par l'extrémité supérieure du boîtier (12).

12. Point de charge de véhicule électrique déployable (10) selon l'une quelconque des revendications précédentes, dans lequel la longueur du boîtier (12) est supérieure à la hauteur du boîtier (12).

13. Point de charge de véhicule électrique déployable (10) selon l'une quelconque des revendications précédentes, comprenant un moyen de communication pour communiquer avec un réseau.

14. Point de charge de véhicule électrique déployable (10) selon l'une quelconque des revendications précédentes, comprenant un moyen de détection d'impact pour détecter, mesurer et enregistrer un impact reçu.

15. Point de charge de véhicule électrique déployable (10) selon l'une quelconque des revendications précédentes, comprenant un moyen d'alarme pour avertir une personne se trouvant à proximité.
